# EUROPEAN PATENT SPECIFICATION

(11) **EP 4 215 292 B1**
(45) Date of publication and mention of the grant of the patent: **21.05.2025**
(21) Application number: 21869268.9
(22) Date of filing: 09.09.2021
(51) Int. Cl.: B21D 5/02, B30B 15/00, G01C 3/06, H04N 7/18

(54) **PRESS BRAKE AND IMAGE OUTPUT METHOD**
ABKANTPRESSE UND BILDAUSGABEVERFAHREN
PRESSE PLIEUSE ET PROCÉDÉ DE SORTIE D'IMAGE

(30) Priority: 18.09.2020 JP 2020157478
(43) Date of publication of application: 26.07.2023
(73) Proprietor: Amada Co., Ltd., Isehara-shi, Kanagawa 259-1196 (JP)
(72) Inventor: KENMOTSU, Hideki, Isehara-shi, Kanagawa 259-1196 (JP)
(74) Representative: Grünecker Patent- und Rechtsanwälte PartG mbB
(86) International application number: PCT/JP2021/033070
(87) International publication number: WO 2022/059581

(56) References cited:
- WO-A2-2020/058326
- CN-A- 107 533 761
- JP-A- 2001 025 823
- JP-A- 2017 213 593
- JP-A- 2019 042 766
- JP-A- 2019 166 529
- US-A1- 2017 123 491

## Description

### Technical Field

The present invention relates to a press brake and an image output method.

### Background Art

Patent Literature 1 discloses that images of a work region of a press brake are captured by a plurality of image capturing devices, and the captured images captured by the plurality of image capturing devices are displayed on display means. Patent Literature 2, which forms the basis for the preambles of claims 1 and 10,discloses a controller capable of further accurately reflecting an actual position of a worker in the control of the operation speed of a forging pressure machine. The controller obtains background image data which does not include images of a workpiece and a worker of the forging pressure machine, and current-state image data presenting a current state of a predetermined area when the forging pressure machine operates, from a sensor which senses a predetermined area including a machining area of the forging pressure machine to output image data for discriminating a distance in a height direction. The system controller calculates difference data between the background image data and the current-state image data, and determines an area of the worker on the basis of the difference data.

### Citation List

### Patent Literature

Patent Literature 1: U.S. Patent Application Publication No. 2019/0176201
Patent Literature 2: Japanese Patent Application Publication No. 2017-213593 A

### Summary

However, since the structure of the press brake is complicated, in addition to a gaze object that a user desires to gaze at, various other objects are present in the captured image captured by the image capturing device. In addition, the press brake has similar colors overall. Therefore, when the user confirms the display means, there is an inconvenience that it is difficult to gaze at the gaze object within the captured image in an efficient manner.

The object is achieved with a press brake according to claim 1, and with an image output method according to claim 10. Preferred embodiments are set out in the dependent claims. One aspect of the present invention is a press brake including a press brake main body, an image capturing device, a distance measuring device, and an image processing device. The press brake main body is provided with an upper table configured to hold an upper tool and a lower table configured to hold a lower tool, and is configured to carry out a bending process to a plate-shaped workpiece when the upper table moves up and down relative to the lower table. The image capturing device captures an image of a work region in which the upper table and the lower table carry out the bending process in the press brake main body, and outputs a captured image. The distance measuring device detects a distance to an object present in the captured image and generates distance data in which the object and the distance are associated with each other. The image processing device generates, based on the distance data, a gaze image obtained by cutting out, from the captured image, a gaze object that is an object to be gazed at within the work region, and outputs the gaze image to a target device usable by a user.

According to the one aspect of the present invention, it is possible to recognize the distance to the object present in the captured image by generating the distance data. Since the distance data is data in which the object and the distance are associated with each other, by referring to the distance data, the image processing device can separate the gaze object and the other objects among the objects images of which are captured by the image capturing device. This makes it possible for the image processing device to generate the gaze image obtained by cutting out the gaze object from the captured image. Then, when the image processing device outputs the gaze image to the target device, the user can use the gaze image via the target device. Since the gaze image is an image obtained by cutting out the gaze object, the gaze object can be visually recognized more easily as compared with the case in which the captured image is visually recognized as it is.

According to the one aspect of the present invention, it is possible to visually recognize the gaze object in the captured image in an efficient manner.

### Brief Description of Drawings

[Figure 1] Figure 1 is a front view schematically showing an overall configuration of a press brake according to a first embodiment.
[Figure 2] Figure 2 is a side view schematically showing the overall configuration of the press brake according to the first embodiment.
[Figure 3] Figure 3 is a block diagram showing a configuration of a control system of the press brake according to the first embodiment.
[Figure 4] Figure 4 is an explanatory diagram showing distances from a distance measuring device to an upper end plane and a lower end plane of a gaze region.
[Figure 5] Figures 5(a) and 5(b) are explanatory diagrams showing a distance distribution of the upper end plane, and a distance distribution of the lower end plane, respectively.
[Figure 6] Figure 6 is an explanatory diagram of definition information that defines a gaze region.
[Figure 7] Figure 7 is a flowchart showing an operation of the press brake according to the first embodiment.
[Figure 8] Figure 8 is an explanatory diagram showing a concept of alignment between a captured image and distance data.
[Figure 9] Figure 9 is an explanatory diagram showing the captured image and a gaze image that is generated from the captured image by a cutout process.
[Figure 10] Figure 10 is an explanatory diagram showing another form of the gaze image.
[Figure 11] Figure 11 is a side view schematically showing an overall configuration of a press brake according to a second embodiment.
[Figure 12] Figures 12(a) and 12(b) are explanatory diagrams respectively showing a distance distribution of an upper end plane and a distance distribution of a lower end plane, both of which correspond to a first distance measuring device,
Figures 12(d) to 12(e)are explanatory diagram respectively showing a distance distribution of an upper end plane and a distance distribution of a lower end plane, both of which correspond to a second distance measuring device, and Figures 12(c) and 12(f) are explanatory diagrams respectively showing the definition information that defines the gaze region.
[Figure 13] Figure 13 is an explanatory diagram showing a correction concept of the definition information.
[Figure 14] Figure 14 is an explanatory diagram showing the correction concept of the definition information.
[Figure 15] Figure 15 is a block diagram showing a configuration of a control system of a press brake in which the captured image and the distance data are structured as one unit of a sensor.

### Description of Embodiments

### (First Embodiment)

A press brake according to the present embodiment will be described with reference to the drawings.

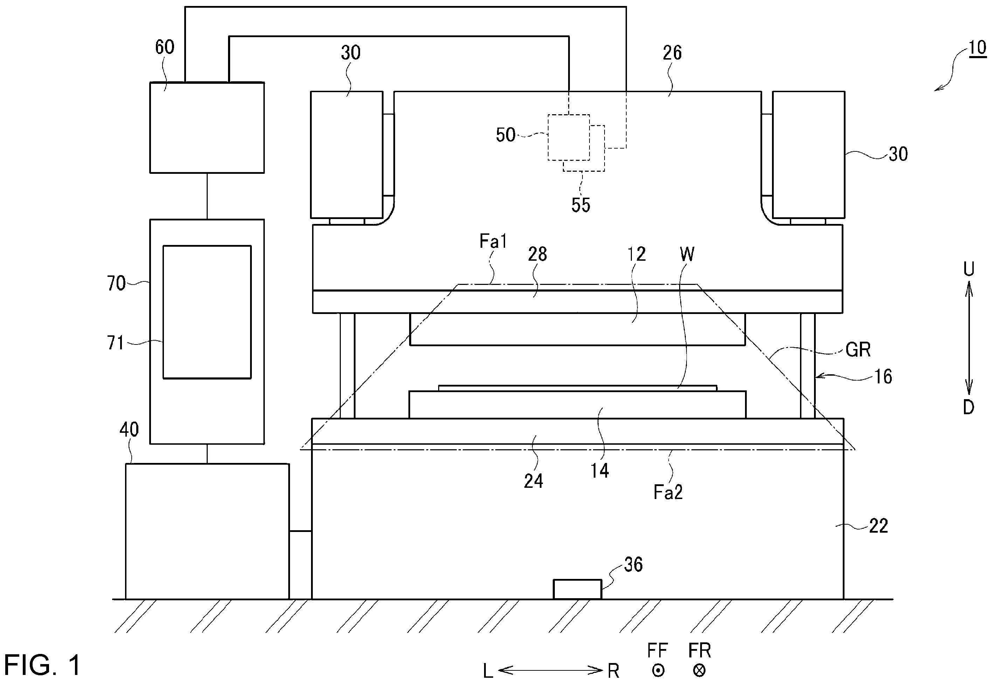

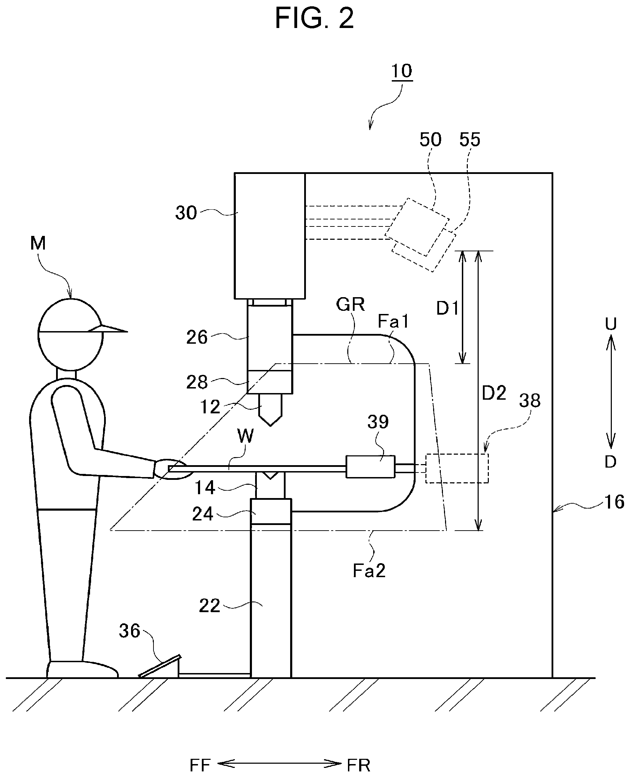

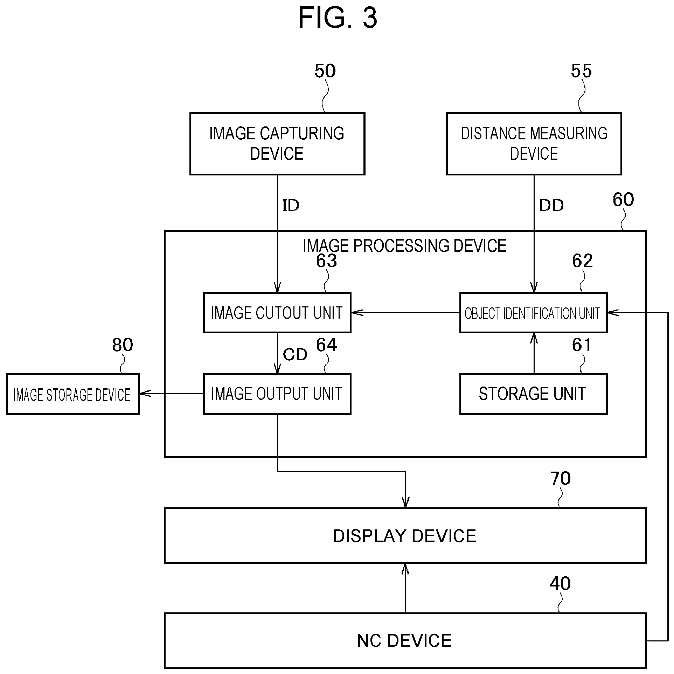

Figure 1 is a front view schematically showing an overall configuration of a press brake according to a first embodiment. Figure 2 is a side view schematically showing the overall configuration of the press brake according to the first embodiment. Figure 3 is a block diagram showing a configuration of a control system of the press brake according to the first embodiment. The press brake according to the present embodiment is provided with an upper table 26 that holds a punch 12 and a lower table 22 that holds a die 14, and includes a press brake main body 10 that carries out a bending process to a plate-shaped workpiece W when the upper table 26 moves up and down relative to the lower table 22, a camera 50 that captures an image of a work region in which the upper table 26 and the lower table 22 carry out the bending process in the press brake main body 10 and outputs a captured image ID, a distance measuring device 55 that detects a distance to an object present in the captured image ID and generates distance data DD in which the object and the distance are associated with each other, and an image processing device 60 that generates, based on the distance data DD, a gaze image CD obtained by cutting out, from the captured image ID, a gaze object that is an object to be gazed at within the work region and outputs the gaze image CD to a target device usable by a user.

Hereinafter, the configuration of the press brake will be explained in detail. The press brake includes the press brake main body 10, an NC device 40, the camera 50, the distance measuring device 55, the image processing device 60, and a display device 70.

The configuration of the press brake main body 10 will be described. "FF", "FR", "L", "R", "U", and "D" shown in the drawings refer to a forward direction, a backward direction, a left direction, a right direction, upward direction and a downward direction, respectively.

The press brake main body 10 is a working machine that carries out the bending process to the plate-shaped workpiece (sheet metal) W by a pair of tools. The press brake main body 10 is provided with the lower table 22 and the upper table 26.

The lower table 22 is provided at the lower part of the main body frame 16 and extends in the lateral direction. The lower table 22 holds a die 14 that is a lower tool. A lower tool holder 24 is attached on the upper end side of the lower table 22, and a die 14 is mounted on the lower tool holder 24.

The upper table 26 is provided at the upper part of the main body frame 16 and extends in the lateral direction. The upper table 26 is provided above the lower table 22 so as to face the lower table 22. The upper table 26 holds a punch 12 that is an upper tool. An upper tool holder 28 is attached on the lower end side of the upper table 26, and a punch 12 is mounted on the upper tool holder 28.

The upper table 26 is configured to move up and down with respect to the lower table 22 when a pair of hydraulic cylinders 30 provided on the left and right are driven up and down, respectively. The individual hydraulic cylinders 30 are driven up and down when an actuator mainly composed of a pump and a motor is operated. The vertical position of the upper table 26 is detected by a position detection sensor such as an unillustrated linear encoder. Position information detected by the position detection sensor is supplied to the NC device 40.

The press brake main body 10 may have a configuration in which the lower table 22 is moved up and down in lieu of the configuration in which the upper table 26 is moved up and down. In other words, the upper table 26 may be configured to move up and down relative to the lower table 22.

An unillustrated table cover that covers the upper table 26 is fixedly attached to the main body frame 16. Even when the upper table 26 moves up and down, the table cover does not move up and down and maintains a stationary state.

In the press brake main body 10, the workpiece W is placed on, for example, the die 14. When the upper table 26 is lowered, the workpiece W is sandwiched between the punch 12 and the die 14 to be bent.

A foot switch 36 on which an operator M carries out a stepping operation is installed in front of the lower table 22. When the operator M carries out the stepping operation, the foot switch 36 outputs an activation signal. The activation signal is a signal for starting a lowering operation of the upper table 26.

Behind the lower table 22, a back gauge 38 for positioning the workpiece W in the front-rear direction with respect to the die 14 is provided. The back gauge 38 includes an abutting member 39 against which the end face of the workpiece W can be abutted. The abutting member 39 protrudes forward from the back gauge 38. The position of the abutting member 39 in the front-rear direction is adjustable.

In the press brake main body 10, a three-dimensional space, which includes the lower table 22 and the surroundings thereof, and the upper table 26 and the surroundings thereof, corresponds to the work region in which the lower table 22 and the upper table 26 carry out the bending process. A gaze region GR, which is to be gazed at within the work region, is defined in the work region.

The gaze region GR is an approximately cubic three-dimensional space that extends in the lateral direction, the up-down direction and the front-rear direction. As shown in Figures 1 and 2, an upper end plane Fa1 of the gaze region GR is set to a size smaller than a lower end plane Fa2 of the gaze region GR, and the gaze region GR has a shape narrowed upward. The reason that the upper end plane Fa1 of the gaze region GR is set to the size smaller than the lower end plane Fa2 of the gaze region GR is to correspond to angles of view of the camera 50 and the distance measuring device 55.

For example, a range in the lateral direction in the gaze region GR is set to include the die 14 mounted on the lower tool holder 24 and the punch 12 mounted on the upper tool holder 28. Further, the vertical range in the gaze region GR is set to include the upper end side of the lower table 22 and the lower end side of the upper table 26. The range in the vertical direction is based on the state when the upper table 26 is in the most raised position (a fully open position).

Further, the range in the front-rear direction in the gaze region GR is set such that predetermined distances are ensured at the front and at the back centering on the lower table 22 and the upper table 26, respectively. The predetermined distance is determined in consideration of the length of the workpiece W in the front-rear direction, the distance from the lower table 22 to the back gauge 38, and the like.

The gaze region GR set in this manner includes the gaze object that is an object to be gazed at within the work region. The gaze object is, for example, the punch 12, the die 14, the back gauge 38, the workpiece W placed on the press brake main body 10, and a hand and an arm of the operator M.

The gaze region GR may be set to a certain range and position regardless of a size of the workpiece W, a layout of the punch 12 and the die 14, and a position of the abutting member 39. However, the gaze region GR may be variably set in a range and a position in accordance with the layout of the punch 12 and the die 14 and the position of the abutting member 39.

The NC (Numerical Control) device 40 is a control device that controls the press brake main body 10. The NC device 40 drives the pair of hydraulic cylinders 30 up and down to control the vertical movement of the upper table 26. The NC device 40 controls the vertical position of the upper table 26 based on the position information detected by a position detection unit.

The camera 50 is an image capturing device that captures an image of the work region centering on the gaze region GR and outputs the captured image ID. The camera 50 is attached to the table cover of the upper table 26 and is arranged behind the upper table 26. The camera 50 captures an image of the gaze region GR and a surrounding region thereof from above the gaze region GR. The camera 50 attached to the table cover does not move up and down even when the upper table 26 moves up and down, and maintains the same position.

When the operator M works, the operator M stands in front of the press brake main body 10 so as to face the press brake main body 10. Since the line of sight of the operator M is obstructed by the upper table 26, the punch 12, the lower table 22, the die 14, and the like, visibility in the work region behind the upper table 26 and the lower table 22 is reduced. In the work region behind the upper table 26 and the lower table 22, there are back sides of the punch 12 and the die 14, a rear region of the workpiece W abutted against the back gauge 38, and the like. By capturing the image of the work region from above and behind the upper table 26 with the camera 50, the work region at the rear in which the visibility of the operator M is low can be covered with the imaging range of the camera 50.

Here, in the situation in which the camera 50 captures the image of the work region, it is sufficient that the gaze region GR is included in the image capturing range, that is, the angle of view of the camera 50. Therefore, when observed from the camera 50, it may be a situation in which a part of the gaze region GR is obstructed by a structure of the press brake main body 10 such as the upper table 26, the upper tool holder 28, the punch 12, the lower table 22, the lower tool holder 24, or the die 14.

The camera 50 includes an image capturing element such as a CCD (Charge Coupled Device) or a CMOS (Complementary Metal Oxide Semiconductor). A wide-angle lens or a fish-eye lens may be attached to the camera 50 so as to be able to capture a wide range. The camera 50 captures the image of the work region in response to a control signal from the image processing device 60, and acquires the captured image ID. The camera 50 outputs the acquired captured image ID to the image processing device 60.

As shown in Figure 3, the distance measuring device 55 is a distance measuring sensor that detects a distance to an object included in an observation range and generates distance data DD in which the object and the distance are associated with each other. The distance measuring device 55 includes, for example, a beam projector such as an LED that projects a beam to the observation range, and an image capturing element. The distance measuring device 55 measures, for each pixel, a TOF (Time Of Flight) that is the time from when the beam projector emits the beam to when the beam is reflected by the object and received by the image capturing element. The distance measuring device 55 detects the distance to the object for each pixel based on the measurement result for each pixel. The distance data DD generated by the distance measuring device 55 corresponds to a two-dimensional distribution of the distance in the observation range.

As shown in Figure 2, the distance measuring device 55 is attached to the table cover of the upper table 26 in the same manner as the camera 50, and is arranged behind the upper table 26. The distance measuring device 55 is arranged at nearly the same position as the camera 50, and the observation range of the distance measuring device 55 also nearly coincides with the imaging pick-up range of the camera 50. As a result, the distance measuring device 55 detects, from above the gaze region GR, the distance to the object that exists in the gaze region GR and the surrounding region thereof. In other words, the distance measuring device 55 detects the distance to the object present in the captured image ID of the camera 50, and generates the distance data DD.

In the same manner as the camera 50, the distance measuring device 55 acquires the distance data DD in response to the control signal from the image processing device 60, and outputs the acquired distance data DD to the image processing device 60.

The resolution (the number of pixels) of the distance data DD generated by the distance measuring device 55 is the same as the resolution (the number of pixels) of the captured image ID output from the camera 50. However, the resolution (the number of pixels) of the distance data DD may be different from the resolution (the number of pixels) of the captured image ID.

In Figure 3, the image processing device 60 displays the captured image ID, which is captured by the camera 50, on the display device 70. The image processing device 60 does not display the captured image ID, which captures the situation in which the press brake main body 10 carries out the bending process, as it is, but displays the gaze image CD obtained by cutting out the gaze object from the captured image ID.

The image processing device 60 outputs the control signals to the camera 50 and the distance measuring device 55 at a predetermined cycle, so as to periodically acquire the captured image ID from the camera 50 and periodically acquire the distance data DD from the image processing device 60. The control signals output from the image processing device 60 to the camera 50 and the distance measuring device 55 are synchronized with each other. Therefore, the image capturing timing by the camera 50 and the distance measuring timing by the distance measuring device 55 are synchronized with each other.

The image processing device 60 is composed of a microcomputer that is mainly composed of a memory such as a CPU (Central Processing Unit), a ROM (Read Only Memory), and a RAM (Random Access Memory), as well as an I/O (Input/Output) interface. The CPU of the image processing device 60 reads, from the ROM or the like, various programs and data in accordance with the processing contents, expands them in the RAM, and executes the expanded various programs. Thereby, the microcomputer functions as a plurality of information processing circuits provided to the image processing device 60. In the present embodiment, an example of realizing the plurality of information processing circuits provided to the image processing device 60 by way of software is shown, but dedicated hardware for executing the respective information processing circuits may be prepared.

The image processing device 60 includes a storage unit 61, an object identification unit 62, an image cutout unit 63, and an image output unit 64 as the plurality of information processing circuits.

The storage unit 61 stores definition information that defines the range of the gaze region GR. The definition information defines the range of the gaze region GR in accordance with the distance from the distance measuring device 55. As shown in Figures 1 and 2, an upper end plane Fa1 of the gaze region GR is a horizontal plane corresponding to the upper end of the gaze region GR. When the vertical direction is used as a reference, the distance between the distance measuring device 55 and the upper end plane Fa1 is a distance D1 at any point on the upper end plane Fa1. On the other hand, a lower end plane Fa2 of the gaze region GR is a horizontal plane corresponding to the lower end of the gaze region GR. When the vertical direction is used as a reference, the distance between the distance measuring device 55 and the lower end plane Fa2 is a distance D2 at any point on the lower end plane Fa2.

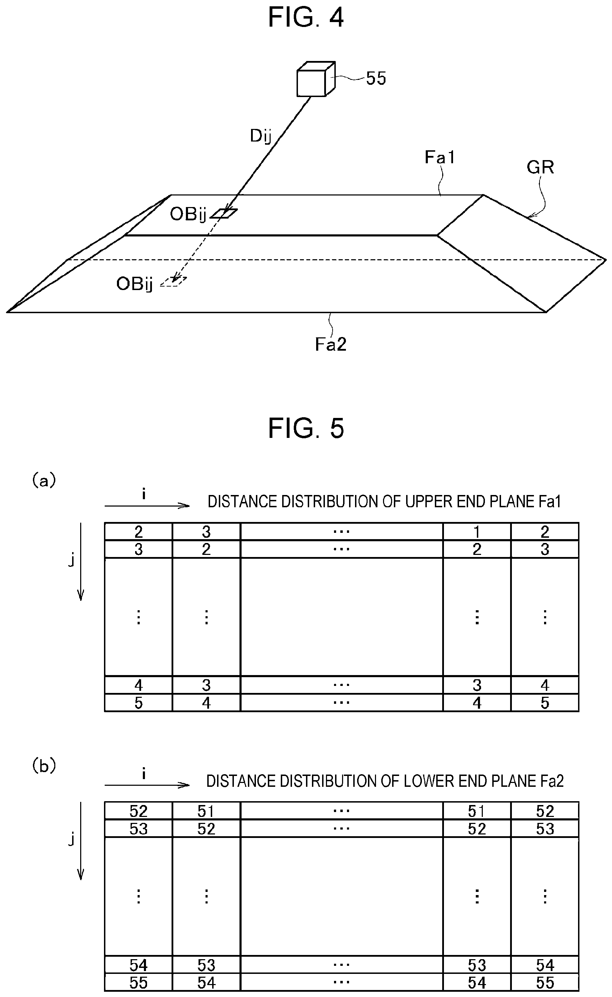

Figure 4 is an explanatory diagram showing distances from the distance measuring device to the upper end plane and the lower end plane of the gaze region. A reference plate having the same size as the upper end plane Fa1 is arranged on the upper end plane Fa1, and the distance to the reference plate is measured by the distance measuring device 55. The distance measuring device 55 receives a reflected beam reflected by an observation point OBij on the reference plate for each pixel constituting the distance data DD, and measures a linear distance Dij between the observation point OBij and the distance measuring device 55. By carrying out such measurement, the distance measuring device 55 measures a distance distribution of the upper end plane Fa1. The distance distribution of the upper end plane Fa1 has a unique distance Dij for each point of the upper end plane Fa1, that is, for each observation point OBij. The same applies to a distance distribution of the lower end plane Fa2.

Figure 5 is an explanatory diagram showing the distance distribution of the upper end plane and the distance distribution of the lower end plane. Information stored in the storage unit 61 includes the distance distribution of the upper end plane Fa1 and the distance distribution of the lower end plane Fa2. As shown in (a) of Figure 5, the distance distribution of the upper end plane Fa1 is information indicating a two-dimensional distance distribution when the upper end plane Fa1 of the gaze region GR is observed from the distance measuring device 55, and the distance Dij is associated with each pixel. As shown in (b) of Figure 5, the distance distribution of the lower end plane Fa2 is information indicating a two-dimensional distance distribution when the lower end plane Fa2 of the gaze region GR is observed from the distance measuring device 55, and the distance Dij is associated with each pixel.

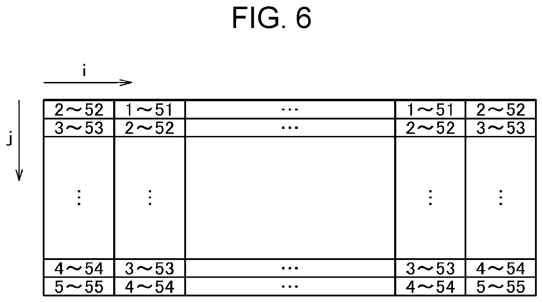

Figure 6 is an explanatory diagram of the definition information that defines the gaze region. From the information stored in the storage unit 61, the distance to the upper end plane Fa1 of the gaze region GR and the distance to the lower end plane Fa2 of the gaze region GR can be recognized, respectively. Therefore, as shown in Figure 6, a range equal to or greater than the distance to the upper end plane Fa1 of the gaze region GR and equal to or smaller than the distance to the lower end plane Fa2 of the gaze region GR functions as the definition information indicating the range of the gaze region GR.

Note that except for the method in which the reference plates are respectively arranged on the upper end plane Fa1 and the lower end plane Fa2 so as to actually measure the distances to the reference plates, other methods may also be used to acquire the distance distribution of the upper end plane Fa1 and the distance distribution of the lower end plane Fa2. For example, the distance distribution of the upper end plane Fa1 and the distance distribution of the lower end plane Fa2 may be obtained by way of geometric calculations in consideration of the positional relationship between the gaze region GR and the distance measuring device 55.

The object identification unit 62 identifies the gaze object based on the definition information and the distance data DD that is output from the distance measuring device 55. The object identification unit 62 identifies, as the gaze object, an object to which the distance Dij is within the gaze region GR, from among the objects present in the captured image ID.

The image cutout unit 63 generates the gaze image CD obtained by cutting out the gaze object from the captured image ID. The gaze image CD generated by the image cutout unit 63 is output to the image output unit 64.

The image output unit 64 outputs the gaze image CD to the display device 70. Further, the image output unit 64 may output the gaze image CD to the image storage device 80. The image storage device 80 can store a predetermined volume of gaze images CD. A user including the operator M can use the gaze image CD stored in the image storage device 80 via a computer.

The display device 70 includes a display panel 71 for displaying information. The display device 70 is arranged at a position visible to the operator M who operates the foot switch 36. The gaze image CD output from the image output unit 64 is displayed on the display panel 71 of the display device 70. Note that the display device 70 may display either the gaze image CD that is output from the image output unit 64 or the captured image ID, which is switched in accordance with the operation of the operator M. Further, on the display panel 71 of the display device 70, information that is output from the NC device 40 or the like can be displayed in addition to the gaze image CD.

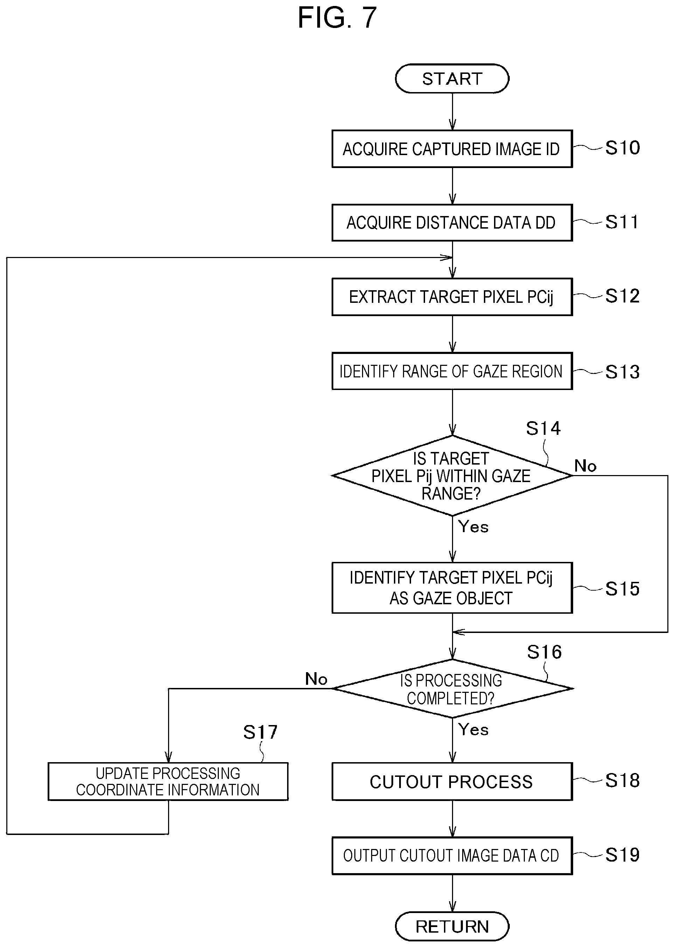

Figure 7 is a flowchart showing an operation of the press brake according to the first embodiment. An image output method according to the present embodiment will be described. The processing shown in the present flowchart is executed by the image processing device 60 at a predetermined cycle.

In step S10, the image cutout unit 63 outputs the control signal to the camera 50 and acquires the captured image ID from the camera 50.

In step S11, the object identification unit 62 outputs the control signal to the distance measuring device 55 and acquires the distance data DD from the distance measuring device 55.

For convenience of description, the processing of step S10 and the processing of step S11 are separated, but it is desirable to execute the processing of step S10 and the processing of step S11 such that the capturing timing of the captured image ID and the distance measuring timing for the object are synchronized with each other.

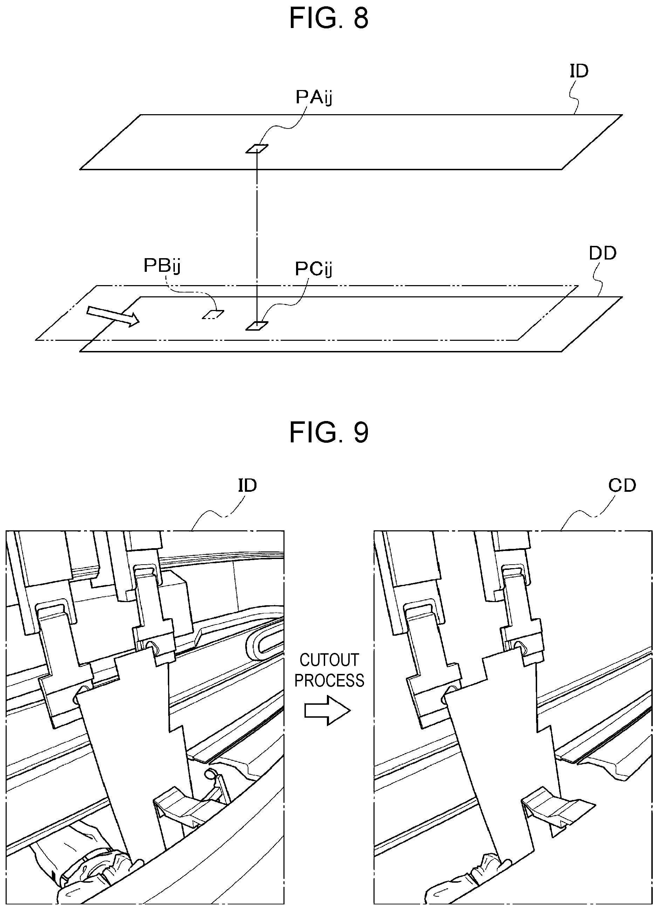

Figure 8 is an explanatory diagram showing a concept of alignment between the captured image and the distance data. The distance data DD that is output from the distance measuring device 55 is pre-processed in advance so as to correspond to the captured image ID. When the positions of the camera 50 and the distance measuring device 55 are offset, as shown in Figure 8, the position (the coordinates) of a pixel PAij of the captured image ID and the position (the coordinates) of the pixel PBij of the distance data DD, which correspond to the same object, may be out of alignment. The object identification unit 62 utilizes a publicly known image processing technique such as coordinate conversion so that the distance data DD is corrected. As a result, the coordinates of the pixel PBij of the distance data DD are corrected to be the coordinates of a pixel PCij corresponding to the coordinates of the pixel PAij of the captured image ID.

The correction process of the distance data DD is carried out not only to a specific pixel but also to all of the pixels constituting the distance data DD. As a result, the coordinates of the distance data DD and the coordinates of the captured image ID are matched for the same object. Therefore, the distance data DD is data in which the distance is associated with each pixel PCij corresponding to the captured image ID, in other words, is equivalent to data in which the object reflected in the pixel PCij and the distance are associated with each other. The correction process of the distance data DD does not have to be carried out by the distance measuring device 55, and may be executed by the object identification unit 62 that has acquired the distance data DD.

In step S12, the object identification unit 62 extracts the target pixel PCij to be processed from among the pixels PCij that constitute the distance data DD. When the processing of step S12 is executed for the first time, the object identification unit 62 extracts, as the target pixel PCij, the pixel PCij that is set in advance such as the pixel PCij located at the upper left in the distance data DD. On the other hand, when the processing of step S12 is executed for the second time onwards, the target pixel PCij is extracted according to processing coordinate information updated in step S17 that will be described later.

In step S13, the object identification unit 62 refers to the definition information stored in the storage unit 61, and identifies the range of the gaze region GR corresponding to the coordinates of the target pixel PCij.

In step S14, the object identification unit 62 determines whether or not the distance Dij of the target pixel PCij is within the gaze region GR. Specifically, the object identification unit 62 determines whether or not the distance Dij of the target pixel PCij is equal to or greater than the distance to the upper end plane Fa1 of the gaze region GR and equal to or smaller than the distance to the lower end plane Fa2 of the gaze region GR. When the distance of the target pixel PCij is within the gaze region GR, an affirmative determination is made in step S14 and the process proceeds to step S15. On the other hand, when the distance of the target pixel PCij is outside the gaze region GR, a negative determination is made in step S14 to skip the process of step S15, and the process proceeds to step S16.

In step S15, the object identification unit 62 identifies the target pixel PCij as the gaze object. The object identification unit 62 outputs coordinate information of the target pixel PCij to the image cutout unit 63 as the coordinate information of the gaze object.

In step S16, the object identification unit 62 determines whether or not the processing is completed. If not all the pixels PCij constituting the distance data DD are extracted as the target pixels PCij, the object identification unit 62 determines that the processing is not completed. In this case, since a negative determination is made in step S16, the process proceeds to step S17. On the other hand, if all of the pixels PCij constituting the distance data DD are extracted as the target pixels PCij, the object identification unit 62 determines that the processing is completed. In this case, since an affirmative determination is made in step S16, the process proceeds to step S18.

In step S17, the object identification unit 62 updates the processing coordinate information. The processing coordinate information is information that identifies the pixel PCij to be extracted as the target pixel PCij in the processing of step S12. The object identification unit 62 updates the processing coordinate information so that the pixel PCij that has not yet been extracted in the distance data DD becomes the target pixel PCij.

Figure 9 is an explanatory diagram showing the captured image and the gaze image that is generated from the captured image by a cutout process. In step S18, as shown in Figure 9, the image cutout unit 63 carries out a process of cutting out a target to be gazed at from the captured image ID, and generates the cutout image as the gaze image CD. The image cutout unit 63 refers to the coordinate information of the gaze object identified by the object identification unit 62, and extracts the pixel PAij corresponding to the information of the gaze object from the captured images ID. The image cutout unit 63 generates an image composed of the extracted pixels PAij as the gaze image CD. The image cutout unit 63 outputs the gaze image CD to the image output unit 64.

In step S19, the image output unit 64 outputs the gaze image CD to the display device 70. The display device 70 to which the gaze image CD is input displays the gaze image CD on the display panel 71 thereof.

As described above, the press brake according to the present embodiment includes the image processing device 60 that generates the gaze image CD obtained by cutting out the gaze object, which is the object to be gazed at within the work region, from the captured image ID based on the distance data DD, and outputs the gaze image CD to the target device usable by the user.

According to the present configuration, by generating the distance data DD, it is possible to recognize the distance to the object present in the captured image ID. Since the distance data DD is the data in which the object and the distance are associated with each other, by referring to the distance data DD, the image processing device 60 can separate the gaze object that exists in the gaze region GR and the object that exists outside the gaze region GR, from among the objects captured with the camera 50. This makes it possible for the image processing device 60 to generate the gaze image CD obtained by cutting out the gaze object from the captured image ID. Then, when the image processing device 60 outputs the gaze image CD to the target device, the user can use the gaze image CD via the target device. Since the gaze image CD is the image obtained by cutting out the gaze object, the gaze object can be visually recognized more easily as compared with the case
in which the captured image ID is visually recognized as it is. As a result, when the image is observed, the gaze object can be visually recognized in an efficient manner.

In the present embodiment, the target device is the display device 70 that is visually recognized by the operator M of the press brake main body 10. According to the present configuration, by using the display device 70, the operator M can confirm the gaze image CD in real time. Then, when the image is observed, the gaze object can be visually recognized in an efficient manner.

However, the target device may be the image storage device 80 usable, via the computer, by the user such as the operator M. According to the present configuration, by using the image storage device 80 via the computer, the user can confirm the gaze image CD at a necessary timing. Then, when the image is observed, the gaze object can be visually recognized in an efficient manner.

In the present embodiment, the gaze region GR is the three-dimensional space that is set between the lower end side of the upper table 26 and the upper end side of the lower table 22.

According to the present configuration, the object involved in the bending process is included in the gaze region GR. This makes it possible for the image processing device 60 to appropriately generate the gaze image CD in which the object involved in the bending process is cut out. Since the gaze image CD is the image obtained by cutting out the gaze object, the gaze object can be visually recognized more easily as compared with the case in which the captured image ID is visually recognized as it is. As a result, when the image is observed, the gaze object can be visually recognized in an efficient manner.

In the present embodiment, the gaze region GR is set to include the punch 12, the die 14, the back gauge 38 against which the workpiece W is abutted, and the workpiece W.

According to the present configuration, the image processing device 60 can appropriately generate the gaze image CD obtained by cutting out the gaze objects such as the punch 12, the die 14, the back gauge 38, and the workpiece W. Since the gaze image CD is the image obtained by cutting out the gaze object, the gaze object can be visually recognized more easily as compared with the case in which the captured image ID is visually recognized as it is. As a result, when the image is observed, the gaze object can be visually recognized in an efficient manner.

The gaze region GR may be set to include the hand and the arm of the operator M that hold the workpiece W. According to the present configuration, the operator M can easily grasp the positional relationship between the body of the operator M himself/herself and the workpiece W by realizing the hand and arm displayed on the display device 70. This makes it possible to improve workability.

The distance data DD is the data in which the distance is associated with each of the plurality of pixels PCij corresponding to the captured image ID. According to the present configuration, in the distance data DD, the distance is associated with each of the pixels PCij. The image processing device 60 can cut out the gaze object in a unit of the pixel by cutting out the captured image ID based on the distance data DD. This makes it possible for the image processing device 60 to cut out the gaze image CD corresponding to the gaze object by a simple process.

Note that in the present embodiment, the distance data DD is the data in which the distance is associated with each of the pixels PCij. However, the distance data DD may be data in which the distance is associated not only with a single pixel PCij but also with each pixel block composed of a plurality of adjacent pixels PCij. Further, the distance data DD may be data in which the distance is associated with each pixel block grouped for each object recognized by an image processing technique. In addition, the distance data DD does not have to correspond to all of the pixels PAij constituting the captured image ID. The distance data DD may be data in which the distance is associated only with a specific pixel PAij that is selected from all of the pixels PAij constituting the captured image ID.

In the present embodiment, the image processing device 60 identifies the gaze object among the objects present in the captured image ID based on the definition information and the distance data DD. According to the present configuration, the image processing device 60 can recognize, by referring to the definition information, the range of the gaze region GR by way of the distance from the distance measuring device 55. Therefore, the image processing device 60 can identify the gaze object by comparing the distance to the object in consideration of the definition information and the distance data DD. This makes it possible to appropriately identify the gaze object.

In the present embodiment, the definition information includes the distance distribution of the upper end plane Fa1 of the gaze region GR and the distance distribution of the lower end plane Fa2 of the gaze region GR. According to the present configuration, the image processing device 60 can recognize, as the gaze object, an object that has a distance equal to or greater than the distance recognized from the distance distribution of the upper end plane Fa1 and equal to or smaller than the distance recognized from the distance distribution of the lower end plane Fa2. This makes it possible for the image processing device 60 to appropriately identify the gaze object.

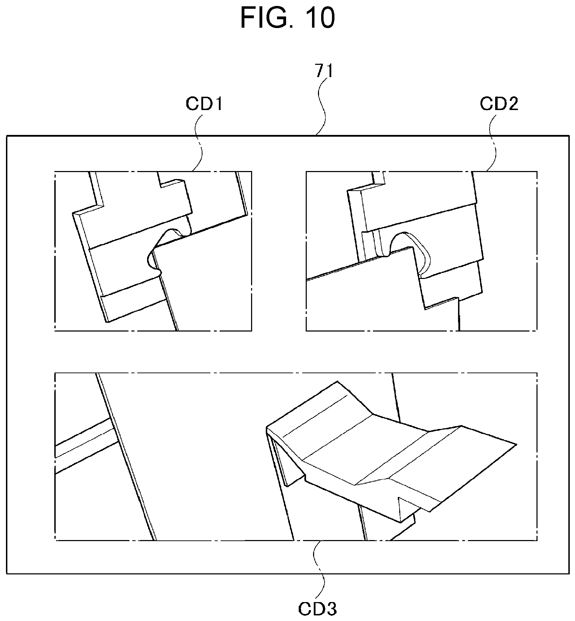

Figure 10 is an explanatory diagram showing another form of the gaze image. Note that in the present embodiment, the object existing in the gaze region GR is recognized as the gaze object and the gaze image CD corresponding to the gaze object is generated. However, the image cutout unit 63 may generate an image obtained by cutting out only a more characteristic part from the gaze image CD. For example, as shown in Figure 10, the image cutout unit 63 may generate cutout images CD1 and CD2 in which attention is paid to an abutting position at which the workpiece W is abutted against the abutting member 39 of the back gauge 38, and a cutout image CD3 in which attention is paid to a contact position of the punch 12 with respect to the workpiece W. In this case, the image cutout unit 63 may hold information of the coordinates corresponding to the positions to which attention should be paid, so as to further cut out an image from the gaze image CD corresponding to the gaze object.

### (Second Embodiment)

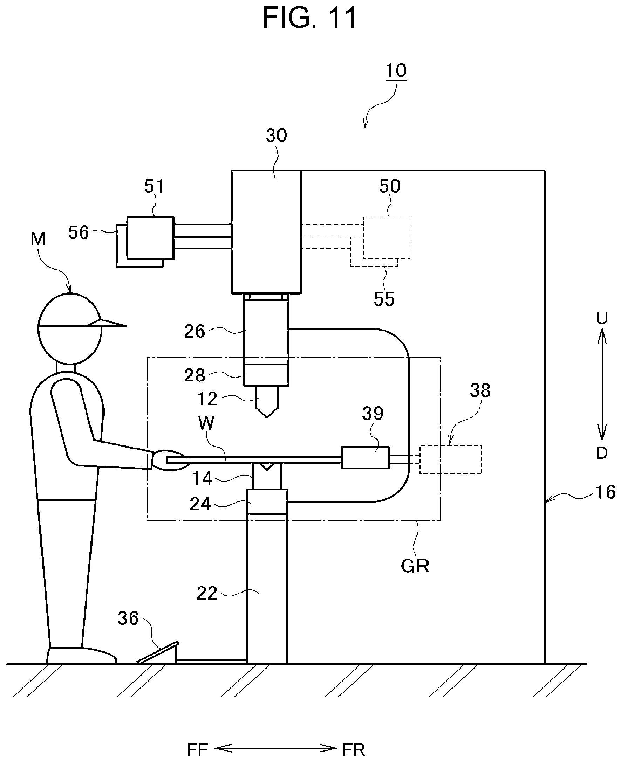

Figure 11 is a side view schematically showing an overall configuration of a press brake according to a second embodiment. A press brake according to the second embodiment will be described. The press brake according to the second embodiment includes a camera 51 and a distance measuring device 56 arranged in front of the upper table 26, in addition to the camera 50 and the distance measuring device 55 arranged behind the upper table 26. Hereinafter, the camera 50 and the distance measuring device 55 arranged behind the upper table 26 are referred to as the first camera 50 and the first distance measuring device 55, and the camera 51 and the distance measuring device 56 arranged in front of the upper table 26 are referred to as the second camera 51 and the second distance measuring device 56.

The first camera 50 and the first distance measuring device 55 are arranged behind the upper table 26. For this reason, in the gaze region GR, objects located in front of the lower table 22 and the upper table 26 may be blocked by the structures such as the upper table 26, the punch 12, the lower table 22, and the die 14 and may not be captured by the first camera 50 and the first distance measuring device 55. Further, depending on the angles of view of the first camera 50 and the first distance measuring device 55, it may not be possible to cover the entire area of the gaze region GR. Therefore, the second camera 51 and the second distance measuring device 56 are arranged in front of the upper table 26 to cover the entire area of the gaze region GR.

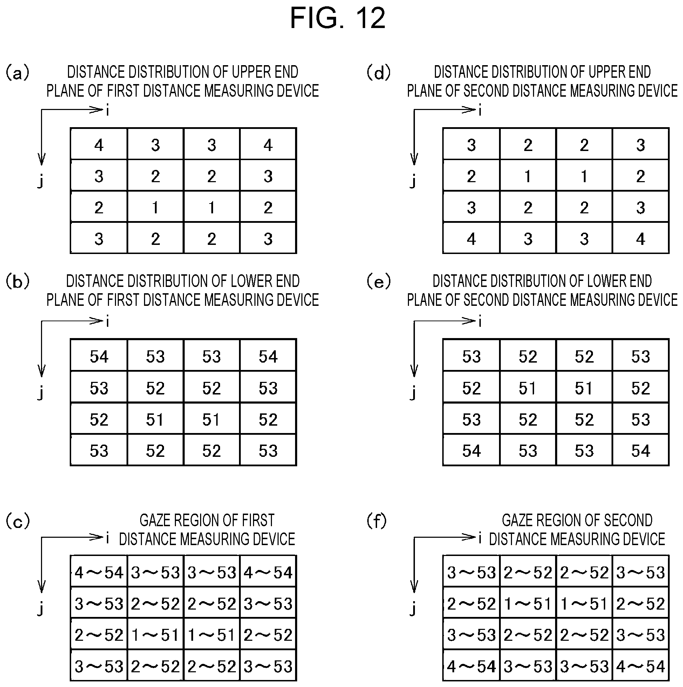

Figure 12 is an explanatory diagram showing the distance distribution of the upper end plane and the distance distribution of the lower end plane that correspond to the first distance measuring device, the distance distribution of the upper end plane and the distance distribution of the lower end plane that correspond to the second distance measuring device, and the definition information that defines the gaze region. As shown in (a) of Figure 12, by detecting the upper end plane Fa1 of the gaze region GR with the first distance measuring device 55, the distance distribution of the upper end plane Fa1 corresponding to the observation range of the first distance measuring device 55 is acquired. As shown in (b) of Figure 12, by detecting the lower end plane Fa2 of the gaze region GR with the first distance measuring device 55, the distance distribution of the lower end plane Fa2 corresponding to the observation range of the first distance measuring device 55 is generated. Then, as shown in (c) of Figure 12, first definition information, which is a range of the gaze region GR corresponding to the observation range of the first distance measuring device 55, is defined from the two distance distributions.

In a similar manner, as shown in Figure (d) of Figure 12, by detecting the upper end plane Fa1 of the gaze region GR with the second distance measuring device 56, the distance distribution of the upper end plane Fa1 corresponding to the observation range of the second distance measuring device 56 is acquired. As shown in (e) of Figure 12, by detecting the lower end plane Fa2 of the gaze region GR with the first distance measuring device 55, the distance distribution of the lower end plane Fa2 corresponding to the observation range of the second distance measuring device 56 is generated. Then, as shown (f) of Figure 12, second definition information, which is a range of the gaze region GR corresponding to the observation range of the first distance measuring device 55, is defined from the two distance distributions.

In the press brake having such a configuration, the object identification unit 62 of the image processing device 60 identifies the gaze object existing in the gaze region GR based on the first and second definition information and the distance data DD of the first distance measuring device 55 and the second distance measuring device 56. The image cutout unit 63 of the image processing device 60 generates the gaze image CD obtained by cutting out the gaze object from the captured image ID.

A method for the process of identifying the gaze object and the process of generating the gaze image CD includes, for example, a method shown below. That is, the method is the one in which the process using the first camera 50 and the first distance measuring device 55 and the process using the second camera 51 and the second distance measuring device 56 are individually carried out, and the gaze image CDs cut out from the respective processes are combined at the end.

Specifically, the object identification unit 62 identifies the gaze object based on the first definition information and the distance data DD of the first distance measuring device 55. Then, the image cutout unit 63 generates the gaze image CD that is obtained by cutting out the gaze object, which identified by the first distance measuring device 55, from the captured image ID of the first camera 50. In the same manner, the object identification unit 62 identifies the gaze object based on the second definition information and the distance data DD of the second distance measuring device 56. Then, the image cutout unit 63 generates the gaze image CD that is obtained by cutting out the gaze object, which is identified by the second distance measuring device 56, from the captured image ID of the second camera 51. Finally, the image cutout unit 63 combines the gaze image CD cut out from the captured image ID of the first camera 50 and the gaze image CD cut out from the captured image ID of the second camera 51 so that the images overlap with each other in the regions in which the image capturing ranges of the first camera 50 and the second camera 51 overlap with each other. As a result, the image cutout unit 63 generates the gaze image CD.

According to the present configuration, by using the plurality of cameras 50 and 51 and the plurality of distance measuring devices 55 and 56 in combination, it is possible to efficiently cover the entire area of the gaze region GR.

### (Third Embodiment)

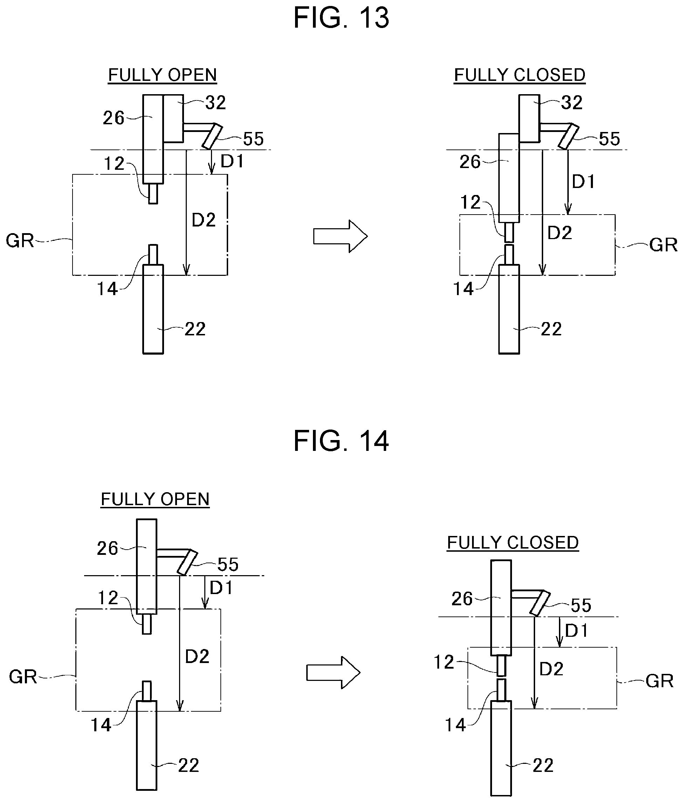

Figure 13 is an explanatory diagram showing a correction concept of the definition information. Figure 14 is an explanatory diagram showing the correction concept of the definition information. The press brake according to a third embodiment will be described. In the press brake according to the third embodiment, the image processing device 60 corrects the range of the gaze region GR in accordance with an operation of the press brake main body 10.

A configuration is considered in which the distance measuring device 55 is attached to a table cover 32 of the upper table 26 as shown in Figure 13. In this case, the distance measuring device 55 attached to the table cover 32 maintains the same position without moving up and down even when the upper table 26 moves up and down.

When the upper table 26 moves up and down, the region to be gazed at substantially changes. This is because the gaze region GR only need to include the gaze objects such as the punch 12, the die 14, the back gauge 38, the workpiece W, and the hand of the operator M. Therefore, the object identification unit 62 corrects the definition information so as to correct the range of the gaze region GR.

When the distance between the distance measuring device 55 and the lower end side of the upper table 26 is "D1", the distance distribution of the upper end plane Fa1 held by the storage unit 61 is set based on the distance D1 when the upper table 26 is in a fully open position. Therefore, the object identification unit 62 corrects the distance distribution of the upper end plane Fa1, which is read from the storage unit 61, in accordance with the vertical movement of the upper table 26. Specifically, the object identification unit 62 corrects the distance distribution of the upper end plane Fa1 as the distance D1 changes in accordance with an amount of movement of the upper table 26 when the upper table 26 moves up and down, that is, the upper end plane Fa1 moves up and down.

Next, a configuration is considered in which the distance measuring device 55 is attached to the upper table 26 as shown in Figure 14. In this case, the distance measuring device 55 attached to the upper table 26 moves up and down in accordance with the vertical movement of the upper table 26.

When the distance measuring device 55 moves up and down, the region to be gazed at substantially changes. This is because the gaze region GR only need to include the gaze objects such as the punch 12, the die 14, the back gauge 38, the workpiece W, and the hand of the operator M. Therefore, the object identification unit 62 corrects the definition information so as to correct the range of the gaze region GR.

When the distance between the distance measuring device 55 and the upper end side of the lower table 22 is "D2", the distance distribution of the lower end plane Fa2 held by the storage unit 61 is set based on the distance D2 when the upper table 26 is in a fully open position. Therefore, the object identification unit 62 corrects the distance distribution of the lower end plane Fa2, which is read from the storage unit 61, in accordance with the vertical movement of the distance measuring device 55. Specifically, the object identification unit 62 corrects the distance distribution of the lower end plane Fa2 as the distance D2 changes in accordance with an amount of movement of the distance measuring device 55 when the distance measuring device 55 moves up and down, that is, the lower end plane Fa2 moves up and down.

In this manner, in the present embodiment, the image processing device 60 can correct the distance distribution of the lower end plane Fa2 in accordance with the vertical movement of the upper table 26. According to the present configuration, the image processing device 60 corrects the distance distribution of the lower end plane Fa2 in accordance with the vertical movement of the distance measuring device 55 that is interlocked with the upper table 26. This makes it possible to optimize the range of the gaze region GR in accordance with the vertical movement of the distance measuring device 55. As a result, only the necessary gaze object can be cut out as the gaze image.

Further, in the present embodiment, the image processing device 60 can correct the distance distribution of the upper end plane Fa1 in accordance with the vertical movement of the upper table 26. According to the present configuration, the image processing device 60 corrects the distance distribution of the upper end plane Fa1 in accordance with the vertical movement of the upper table 26. This makes it possible to optimize the range of the gaze region GR in accordance with the vertical movement of the upper table 26. As a result, only the necessary gaze object can be cut out as the gaze image.

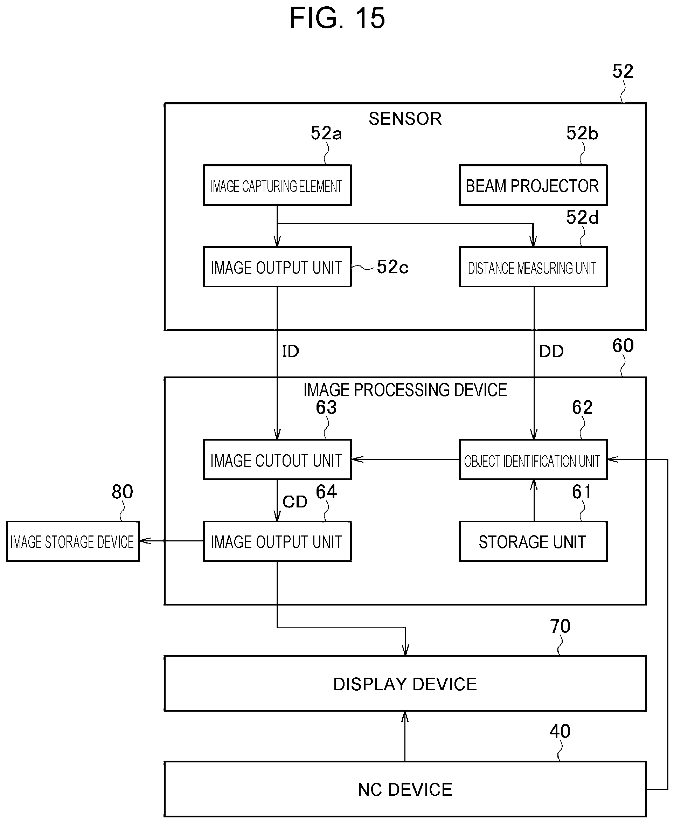

Figure 15 is a block diagram showing a configuration of a control system of the press brake in which the captured image and the distance data are structured as one unit of a sensor. Note that in the embodiment described above, the camera 50 and the distance measuring device 55 are configured as separate devices. As shown in Figure 15, the camera 50 and the distance measuring device 55 may also be configured as one unit of a sensor 52.

For example, the sensor 52 includes an image capturing element 52a and a beam projector 52b. The sensor 52 includes an image output unit 52c that receives a luminance signal indicating an intensity of a reflected beam received by the image capturing element 52a and outputs the image capturing ID having the luminance indicating the intensity of the reflected signal based on the luminance signal. Further, the sensor 52 measures a delay time of a beam receiving timing with respect to the beam receiving timing for each pixel based on the luminance signal, and generates the distance data DD indicating the distance to the object.

According to the present configuration, since the camera 50 and the distance measuring device 55 can be integrated, the device can be simplified.

As described above, the embodiments of the present invention have been described, but the statements and drawings that form a part of the present disclosure should not be understood to limit the present invention. The present disclosure will reveal, to those skilled in the art, various alternative embodiments, examples, and operational techniques.

For example, the distance measuring device is not limited to the configuration using the image capturing element, and may have a configuration in which a two-dimensional distance distribution is generated by using a laser radar, an ultrasonic sensor, or the like. Further, the press brake main body 10 is configured such that the operator M places the workpiece W, but the workpiece W may be placed by a transfer robot.

Further, not only the press brake described above, but also the image output method for outputting the gaze image from the captured image and the distance data also function as a part of the present invention.

## Claims

1. A press brake, comprising:
a press brake main body (10) provided with an upper table (26) configured to hold an upper tool (12) and a lower table (22) configured to hold a lower tool (14), the press brake main body (10) being configured to carry out a bending process to a plate-shaped workpiece when the upper table (26) moves up and down relative to the lower table (22);
an image capturing device (50) configured to capture an image of a work region in which the upper table (26) and the lower table (22) carry out the bending process in the press brake main body (10), and output a captured image (ID); and
a distance measuring device (55) configured to detect a distance to an object present in the captured image (ID) and generate distance data (DD) in which the object and the distance are associated with each other
**characterized by**
an image processing device (60) configured to generate, based on the distance data (DD), a gaze image (CD) obtained by cutting out, from the captured image (ID), a gaze object that is an object to be gazed at within the work region, and output the gaze image (CD) to a target device usable by a user.

2. The press brake according to claim 1, wherein
the image processing device (60) is configured to identify, from among objects present in the captured image (ID), an object existing within a predetermined gaze region as the gaze object, and
the gaze region is a three-dimensional space set between a lower end side of the upper table (26) and an upper end side of the lower table (22).

3. The press brake according to claim 2, wherein the gaze region is set to include an upper tool (12) held by the upper table (26), a lower tool (14) held by the lower table (22), a back gauge (38) against which the workpiece is abutted, and the workpiece placed on the press brake main body (10).

4. The press brake according to any one of claims 1 to 3, wherein the distance data (DD) is data in which the distance is associated with each of one or more pixels corresponding to the captured image (ID).

5. The press brake according to claim 2 or 3, wherein the image processing device (60) is configured to
hold definition information defining a range of the gaze region in accordance with a distance from the distance measuring device (55), and
identify, as the gaze object, the object that is present in the captured image (ID) and to which a distance is within the gaze region, based on the definition information and the distance data (DD).

6. The press brake according to claim 5, wherein
the image capturing device (50) is configured to capture an image of the gaze region from above the gaze region,
the distance measuring device (55) is configured to detect the distance to the object from above the gaze region and generate the distance data (DD), and
the definition information includes:
a distance distribution of an upper end plane of the gaze region indicating a two-dimensional distance distribution when the upper end plane is observed from the distance measuring device (55); and
a distance distribution of a lower end plane of the gaze region indicating a two-dimensional distance distribution when the lower end plane is observed from the distance measuring device (55).

7. The press brake according to claim 6, wherein
the upper table (26) is configured so as to be able to move up and down,
the distance measuring device (55) is fixed to the upper table (26) and moves up and down in accordance with a vertical movement of the upper table (26), and
the image processing device (60) is configured to correct the distance distribution of the lower end plane in accordance with the vertical movement of the upper table (26).

8. The press brake according to claim 6, wherein
the upper table (26) is configured so as to be able to move up and down;
the distance measuring device (55) is fixed in an immovable manner without being involved with the vertical movement of the upper table (26); and
the image processing device (60) is configured to correct the distance distribution of the upper end plane in accordance with the vertical movement of the upper table (26) and the upper end plane.

9. The press brake according to any one of claims 1 to 8, wherein the target device is a display device visually recognized by an operator of the press brake main body (10) who is the user, or a storage device usable by the user via a computer.

10. An image output method, comprising:
capturing, by an image capturing device (50), an image of a work region in which an upper table (26) and a lower table (22) provided to a press brake main body (10) carry out a bending process to a plate-shaped workpiece by relatively moving up and down, and outputting a captured image (ID);
detecting a distance to an object present in the captured image (ID) and generating distance data (DD) in which the object and the distance are associated with each other,
**characterized by**
generating, based on the distance data (DD), a gaze image (CD) obtained by cutting out, from the captured image (ID), a gaze object that is an object to be gazed at within the work region; and
outputting the gaze image (CD) to a target device usable by a user.

## Patentansprüche

1. Eine Abkantpresse, umfassend:
einen Abkantpressen-Hauptkörper (10), der mit einem oberen Tisch (26), der konfiguriert ist, ein oberes Werkzeug (12) zu halten, und einem unteren Tisch (22), der konfiguriert ist, ein unteres Werkzeug (14) zu halten, versehen ist, wobei der Abkantpressen-Hauptkörper (10) konfiguriert ist, einen Biegevorgang an einem plattenförmigen Werkstück durchzuführen, wenn sich der obere Tisch (26) relativ zu dem unteren Tisch (22) auf und ab bewegt;
eine Bilderfassungsvorrichtung (50), die konfiguriert ist, ein Bild eines Arbeitsbereichs zu erfassen, in dem der obere Tisch (26) und der untere Tisch (22) den Biegevorgang in dem Abkantpressen-Hauptkörper (10) ausführen, und ein erfasstes Bild (ID) auszugeben; und
eine Abstandsmessvorrichtung (55), die konfiguriert ist, einen Abstand zu einem in dem erfassten Bild (ID) vorhandenen Objekt zu erfassen und Abstandsdaten (DD) zu erzeugen, in denen das Objekt und der Abstand einander zugeordnet sind
**gekennzeichnet durch**
eine Bildverarbeitungsvorrichtung (60), die konfiguriert ist, auf der Grundlage der Abstandsdaten (DD) ein Blickbild (CD) zu erzeugen, das durch Ausschneiden eines Blickobjekts aus dem erfassten Bild (ID) erhalten wird, bei dem es sich um ein Objekt handelt, das innerhalb des Arbeitsbereichs betrachtet werden soll, und das Blickbild (CD) an eine von einem Benutzer verwendbare Zielvorrichtung auszugeben.

2. Die Abkantpresse gemäß Anspruch 1, wobei
die Bildverarbeitungsvorrichtung (60) konfiguriert ist, unter den in dem erfassten Bild (ID) vorhandenen Objekten ein Objekt, das innerhalb eines vorbestimmten Blickbereichs existiert, als das Blickobjekt zu identifizieren, und
der Blickbereich ein dreidimensionaler Raum ist, der zwischen einer unteren Endseite des oberen Tisches (26) und einer oberen Endseite des unteren Tisches (22) festgelegt ist.

3. Die Abkantpresse gemäß Anspruch 2, wobei
der Blickbereich so eingestellt ist, dass er ein vom oberen Tisch (26) gehaltenes oberes Werkzeug (12), ein vom unteren Tisch (22) gehaltenes unteres Werkzeug (14), einen Hinteranschlag (38), an dem das Werkstück anliegt, und das auf dem Abkantpressen-Hauptkörper (10) platzierte Werkstück umfasst.

4. Die Abkantpresse gemäß einem der Ansprüche 1 bis 3, wobei
die Abstandsdaten (DD) Daten sind, in denen die Entfernung mit jedem von einem oder mehreren Pixeln verbunden ist, die dem erfassten Bild (ID) entsprechen.

5. Die Abkantpresse gemäß Anspruch 2 oder 3, wobei
die Bildverarbeitungsvorrichtung (60) konfiguriert ist, um
Definitionsinformationen zu halten, die einen Bereich des Blickbereichs in Übereinstimmung mit einem Abstand von der Abstandsmessvorrichtung (55) definieren, und
als das Blickobjekt das Objekt zu identifizieren, das in dem erfassten Bild (ID) vorhanden ist und zu dem ein Abstand innerhalb des Blickbereichs ist, basierend auf den Definitionsinformationen und den Abstandsdaten (DD).

6. Die Abkantpresse gemäß Anspruch 5, wobei
die Bilderfassungsvorrichtung (50) konfiguriert ist, ein Bild des Blickbereichs von oberhalb des Blickbereichs zu erfassen,
die Abstandsmessvorrichtung (55) konfiguriert ist, den Abstand zu dem Objekt von oberhalb des Blickbereichs zu erfassen und die Abstandsdaten (DD) zu erzeugen, und
die Definitionsinformationen umfassen
eine Abstandsverteilung einer oberen Endebene des Blickbereichs, die eine zweidimensionale Abstandsverteilung anzeigt, wenn die obere Endebene von der Abstandsmessvorrichtung (55) aus betrachtet wird; und
eine Abstandsverteilung einer unteren Endebene des Blickbereichs, die eine zweidimensionale Abstandsverteilung anzeigt, wenn die untere Endebene von der Abstandsmessvorrichtung (55) aus betrachtet wird.

7. Die Abkantpresse gemäß Anspruch 6, wobei
der obere Tisch (26) ausgebildet ist, sich auf und ab bewegen zu können,
die Abstandsmesseinrichtung (55) am oberen Tisch (26) befestigt ist und sich entsprechend einer vertikalen Bewegung des oberen Tisches (26) auf und ab bewegt, und
die Bildverarbeitungsvorrichtung (60) ausgebildet ist, die Abstandsverteilung der unteren Endebene entsprechend der vertikalen Bewegung des oberen Tisches (26) zu korrigieren.

8. Die Abkantpresse gemäß Anspruch 6, wobei
der obere Tisch (26) ausgebildet ist, sich auf und ab bewegen zu können;
die Abstandsmessvorrichtung (55) unbeweglich befestigt ist, ohne mit der vertikalen Bewegung des oberen Tisches (26) verbunden zu sein; und
die Bildverarbeitungsvorrichtung (60) konfiguriert ist, die Abstandsverteilung der oberen Endebene in Übereinstimmung mit der vertikalen Bewegung des oberen Tisches (26) und der oberen Endebene zu korrigieren.

9. Die Abkantpresse gemäß einem der Ansprüche 1 bis 8, wobei
es sich bei der Zielvorrichtung um eine Anzeigevorrichtung handelt, die von einem Bediener des Abkantpressen-Hauptkörpers (10), der der Benutzer ist, visuell erkannt wird, oder um eine Speichervorrichtung, die von dem Benutzer über einen Computer genutzt werden kann.

10. Ein Bildausgabeverfahren, umfassend:
Erfassen eines Bildes eines Arbeitsbereichs, in dem ein oberer Tisch (26) und ein unterer Tisch (22), die an einem Abkantpressen-Hauptkörper (10) angeordnet sind, einen Biegevorgang an einem plattenförmigen Werkstück durch relatives Auf- und Abbewegen durchführen, durch eine Bilderfassungsvorrichtung (50), und Ausgeben eines erfassten Bildes (ID);
Erfassen eines Abstands zu einem Objekt, das in dem erfassten Bild (ID) vorhanden ist, und Erzeugen von Abstandsdaten (DD), in denen das Objekt und der Abstand einander zugeordnet sind,
**gekennzeichnet durch**
Erzeugen eines Blickbildes (CD) auf der Grundlage der Abstandsdaten (DD), das durch Ausschneiden eines Blickobjekts aus dem erfassten Bild (ID) erhalten wird, bei dem es sich um ein Objekt handelt, das innerhalb des Arbeitsbereichs zu betrachten ist; und
Ausgeben des Blickbildes (CD) an eine Zielvorrichtung, die von einem Benutzer verwendet werden kann.

## Revendications

1. Presse plieuse comprenant :
un corps principal de presse plieuse (10) doté d'une table supérieure (26) configurée pour maintenir un outil supérieur (12) et d'une table inférieure (22) configurée pour maintenir un outil inférieur (14), le corps principal de presse plieuse (10) étant configuré pour réaliser un processus de pliage sur une pièce en forme de plaque lorsque la table supérieure (26) se déplace vers le haut et vers le bas par rapport à la table inférieure (22) ;
un dispositif de capture d'image (50) configuré pour capturer une image d'une région de travail dans laquelle la table supérieure (26) et la table inférieure (22) réalisent le processus de pliage dans le corps principal de presse plieuse (10), et pour délivrer en sortie une image capturée (ID) ; et
un dispositif de mesure de distance (55) configuré pour détecter une distance par rapport à un objet présent dans l'image capturée (ID) et générer des données de distance (DD) dans lesquelles l'objet et la distance sont associés entre eux,
**caractérisée par**
un dispositif de traitement d'image (60) configuré pour générer, sur la base des données de distance (DD), une image de regard (CD) obtenue par découpage, dans l'image capturée (ID), d'un objet de regard qui est un objet à regarder dans la région de travail, et délivrer en sortie l'image de regard (CD) à un dispositif cible utilisable par un utilisateur.

2. Presse plieuse selon la revendication 1, dans laquelle
le dispositif de traitement d'image (60) est configuré pour identifier, parmi les objets présents dans l'image capturée (ID), un objet existant dans une région de regard prédéterminée comme étant l'objet de regard, et
la région de regard est un espace tridimensionnel établi entre un côté d'extrémité inférieur de la table supérieure (26) et un côté d'extrémité supérieur de la table inférieure (22).

3. Presse plieuse selon la revendication 2, dans laquelle la région de regard est établie pour inclure un outil supérieur (12) maintenu par la table supérieure (26), un outil inférieur (14) maintenu par la table inférieure (22), une butée arrière (38) contre laquelle la pièce est en butée, et la pièce placée sur le corps principal de presse plieuse (10).

4. Presse plieuse selon l'une quelconque des revendications 1 à 3, dans laquelle les données de distance (DD) sont des données dans lesquelles la distance est associée à chacun d'un ou plusieurs pixels correspondant à l'image capturée (ID).

5. Presse plieuse selon la revendication 2 ou 3, dans laquelle le dispositif de traitement d'image (60) est configuré pour
contenir des informations de définition définissant une plage de la région de regard en fonction d'une distance par rapport au dispositif de mesure de distance (55), et
identifier, comme étant l'objet de regard, l'objet qui est présent dans l'image capturée (ID) et dont la distance se situe dans la région de regard, sur la base des informations de définition et des données de distance (DD).

6. Presse plieuse selon la revendication 5, dans laquelle
le dispositif de capture d'image (50) est configuré pour capturer une image de la région de regard depuis le dessus de la région de regard,
le dispositif de mesure de distance (55) est configuré pour détecter la distance par rapport à l'objet depuis le dessus de la région de regard et générer les données de distance (DD), et
les informations de définition comprennent :
une répartition de distances d'un plan d'extrémité supérieur de la région de regard indiquant une répartition de distances bidimensionnelle lorsque le plan d'extrémité supérieur est observé depuis le dispositif de mesure de distance (55) ; et
une répartition de distances d'un plan d'extrémité inférieur de la région de regard indiquant une répartition de distances bidimensionnelle lorsque le plan d'extrémité inférieur est observé depuis le dispositif de mesure de distance (55).

7. Presse plieuse selon la revendication 6, dans laquelle
la table supérieure (26) est configurée de manière à pouvoir se déplacer vers le haut et vers le bas,
le dispositif de mesure de distance (55) est fixé à la table supérieure (26) et se déplace vers le haut et vers le bas en fonction d'un mouvement vertical de la table supérieure (26), et
le dispositif de traitement d'image (60) est configuré pour corriger la répartition de distances du plan d'extrémité inférieur en fonction du mouvement vertical de la table supérieure (26).

8. Presse plieuse selon la revendication 6, dans laquelle
la table supérieure (26) est configurée de manière à pouvoir se déplacer de vers le haut et vers le bas ;
le dispositif de mesure de distance (55) est fixé de manière immobile sans intervenir dans le mouvement vertical de la table supérieure (26) ; et
le dispositif de traitement d'image (60) est configuré pour corriger la répartition de distances du plan d'extrémité supérieur en fonction du mouvement vertical de la table supérieure (26) et du plan d'extrémité supérieur.

9. Presse plieuse selon l'une quelconque des revendications 1 à 8, dans laquelle le dispositif cible est un dispositif d'affichage reconnu visuellement par un opérateur du corps principal de presse plieuse (10) qui est l'utilisateur, ou un dispositif de stockage utilisable par l'utilisateur via un ordinateur.

10. Procédé de sortie d'image, comprenant :
la capture, par un dispositif de capture d'image (50), d'une image d'une région de travail dans laquelle une table supérieure (26) et une table inférieure (22) équipant un corps principal de presse plieuse (10) réalisent un processus de pliage sur une pièce en forme de plaque en se déplaçant relativement vers le haut et vers le bas, et la sortie d'une image capturée (ID) ;
la détection d'une distance par rapport à un objet présent dans l'image capturée (ID) et la génération de données de distance (DD) dan lesquelles l'objet et la distance sont associés entre eux,
**caractérisé par**
la génération, sur la base des données de distance (DD), d'une image de regard (CD) obtenue par découpage, dans l'image capturée (ID), d'un objet de regard qui est un objet à regarder dans la région de travail ; et
la sortie de l'image de regard (CD) vers un dispositif cible utilisable par un utilisateur.
